# FASCICULE DE BREVET EUROPEEN

(11) **EP 0 490 900 B1**
(45) Date de publication et mention de la délivrance du brevet: **20.04.1994**
(21) Numéro de dépôt: 90909749.5
(22) Date de dépôt: 11.06.1990
(51) Int. Cl.: A21B 3/07, A21B 2/00

(54) **DISPOSITIF DE REMISE EN TEMPERATURE A SECTEURS SELECTIONNABLES POUR PRODUITS ALIMENTAIRES**
VORRICHTUNG MIT AUSWÄHLBAREN SEKTOREN ZUR ERWÄRMUNG VON NAHRUNGSMITTELN
SELECTIVE REHEATING DEVICE FOR FOOD PRODUCTS

(30) Priorité: 12.06.1989 FR 8907844; 17.04.1990 FR 9004986
(43) Date de publication de la demande: 24.06.1992
(73) Titulaire: GRANDI, René, F-38300 Bourgoin-Jallieu (FR)
(72) Inventeur: GRANDI, René, F-38300 Bourgoin-Jallieu (FR)
(74) Mandataire: Roman, Michel
(86) Numéro de dépôt international: FR9000409
(87) Numéro de publication internationale: WO9015536

(56) Documents cités:
- WO-A-88/06408
- DE-A- 3 625 015
- FR-A- 2 263 699
- GB-A- 1 170 051

## Description

Il est connu différents dispositifs de remise en température par micro-ondes ou autres, pour des produits stockés sur des plateaux dans une enceinte réfrigérée. Mais l'opération se fait manuellement, en introduisant chaque plateau que l'on veut chauffer dans le micro-ondes, juste le temps nécessaire à la remise en température des produits qu'il contient. Cette manutention se révèle longue et fastidieuse.

Sont connus également des distributeurs de mets ou plats cuisinés , lesquels, une fois réceptionné s par le consommateur, sont introduits également manuellement par ce dernier dans un four à micro-ondes afin d'y être remis à température.

Tous ces dispositifs, ni ne sont programmés, ni ne peuvent réchauffer des plats individuellement et automatiquement par des secteurs sélectionnables de remise en température, ni ne peuvent les distribuer automatiquement au consommateur.

Cependant, le brevet DE-A-3 623 015 décrit un dispositif automatique apte à prendre, à l'aide d'un bras articulé, des produits alimentaires précuits tels pizzas, hamburgers, frites, etc, se trouvant sur des étougères consituent une ou plusieurs colonnes de stockage situées dans une zone réfrigérée d'une enceinte pour les introduire dans un four micro-ondes afin de les réchauffer ou d'achever leur cuisson, ces produits étant ensuite déposés dans une assiette en papier grâce à une bande transporteuse.

Le brevet GB-A-1 170 051, quant à lui, présente un distributeur automatique de mets chauds constitué d'une enceinte isolée thermiquement comportant un système de stockage constitué de guides horizontaux dans lesquels peuvent coulisser des bacs mobiles qui peuvent être amenés sélectivement dans un four microondes grâce à un mécanisme complexe se permettant de combiner des mouvements horizontaux et verticaux, les articles une fois réchauffés étant simplement retirés du four par le consommateur après ouverture d'une porte isolante.

Ces appareils ont en commun de faire appel à des moyens de manutentions des produits à réchauffer très complexes et par conséquent sujets à des pannes de fonctionnement, et de ne pouvoir s'appliquer à la distribution de plateaux-repas comportant à la fois des plats chauds et des plats froids.

Le dispositif qui va être décrit selon l'invention évite ces inconvénients et permet de remettre en température et de distribuer individuellement un plat cuisiné contenu dans un plateau ou non, et selon le choix du consommateur. Le tout étant stocké en attente dans une enceinte réfrigérée.

Il se présente sous la forme d'une armoire de distribution composée d'une enceinte réfrigérée où sont gerbés sur des étagères en une ou plusieurs colonnes, un certain nombre de plats cuisinés ou de plateaux contenant un repas complet, avec une zone de remise en température du plat destiné à être réchauffé.

Sur le côté ou à l'arrière de ce gerbage de plateaux est située parallèlement et verticalement une vis sans fin à billes.

Cette dernière est porteuse d'un four, de préférence à micro-ondes, pouvant se déplacer de bas en haut ou inversement afin de venir s'arrêter face au plateau qui aura été sélectionné par le consommateur. Le déplacement du micro-ondes est effectué par la rotation de cette vis sans fin auto-lubrifiée et actionnée à sa base par un moteur pouvant la faire tourner dans un sens ou dans l'autre.

D'autre part, plusieurs types d'énergie thermique peuvent être envisagés en dehors du micro-ondes, pour la remise en température ou la cuisson, tels que des brûleurs à infrarouge des tubes halogènes, le chauffage par induction, ou tous autres systèmes pouvant s'adapter et être performants, tout en gardant le même système d'entrée des plateaux.

Pour ces derniers moyens de chauffe qui sont moins coûteux et moins encombrants, une autre variante d enceinte de cuisson peut alors être envisagée selon le coût de revient de la mise en oeuvre, c'est-à-dire que chaque étagère porte-plateaux est équipée d'un mini-four à brûleurs infrarouges, halogènes ou autres dans lequel le plateau vient pénêtrer. Pour cette dernière variante, aucune translation verticale ni horizontale n'est nécessaire.

Deux glissières recouvertes de films à base de silicone permettent au micro-ondes d'être maintenu pour une meilleure stabilité et précision dans le glissement et le guidage de ce dernier, lors de son déplacement vertical.

Le plateau ayant été sélectionné par le consommateur, le micro-ondes et son magnétron positionnés face au plateau, un mécanisme de mouvement situé sous le plateau mais non solidaire vient faire coulisser ce dernier pour introduire dans le micro-ondes, la zone devant être réchauffée.

Ce mécanisme est actionné par une tige filetée et son moteur qui permet à un arbre à cames de venir coulisser du haut en bas et vice versa, afin que les ergots situés sur cet arbre à cames viennent enclencher le mécanisme situé sous le plateau choisi. Une fois le mécanisme enclenché, un moteur situé à la base de l'arbre à cames fait effectuer à ce dernier une rotation faisant actionner le mécanisme du plateau pour le faire déplacer jusqu'à ce que la zone à réchauffer soit dans le micro-ondes. La remise en température étant terminée, la rotation s'effectue dans le sens inverse et vient sortir le plateau hors du micro-ondes pour le glisser plus loin que sa place initiale d'attente prêt à être saisi par le consommateur.

Un détecteur placé sur l'arbre à cames détermine et amène l'ergot équivalent au plateau choisi pour enclencher le mécanisme de ce dernier. Ce mécanisme est composé d'un support articulé par deux timoneries à biélettes permettant une parfaite rotation pour le déplacement du plateau.

Deux glissières de chaque côté du plateau et sur l'étagère permettent à ce dernier un déplacement et un guidage parfaits.

Une fois l'introduction de la zone du plateau effectuée dans le micro-ondes, une barrière thermique vient fermer l'entrée du micro-ondes afin d isoler la zone de remise en température et la zone réfrigérée de l'enceinte, afin que les calories ne se dispersent pas dans les frigories, et pour permettre une remise en température plus rapide du plat cuisiné. Cette barrière thermique sert également de butée au plateau entrant dans le micro-ondes.

Un soufflet-accordéon fixé sur le micro-ondes et accompagnant celui-ci dans son déplacement vertical vient isoler la zone réfrigérée de l'enceinte et la zone de circulation du micro-ondes, pour éviter que les calories accumulées ne viennent ce disperser dans la zone réfrigérée.

Une zone d'air formant un rideau permet le refroidissement des calories résiduelles émanant du micro-ondes. Le recyclage de ces calories est effectué par une gaine formant aspiration et ventilation et refroidi par le groupe frigorifique.

Selon une première variante plus particulièrement adaptée aux micro-ondes, le dispositif est constitué par une armoire de distribution comportant une enceinte réfrigérée à plusieurs colonnes de stockage des plateaux-repas. Une vis à bille horizontale motorisée permet à l'ensemble, vis à bille verticale et glissières maintenant le four de cuisson ou de remise en température, d'effectuer une translation horizontale de gauche à droite et vice versa, afin de translater le four devant la colonne choisie, la vis à bille verticale venant alors positionner le four face au plateau-repas comportant le menu sélectionné. Le four effectue ainsi une translation horizontale puis une translation verticale.

Le soufflet-accordéon accompagnant le four dans son déplacement vertical ne peut se déployer dans son déplacement horizontal, le four et le soufflet-accordéon sont donc cloisonnés dans un box séparant la zone chaude de cuisson ou de remise en température de la zone froide réfrigérée. Le box se déplace uniquement de façon horizontale, en venant se positionner face à la colonne choisie. Le four se déplace veticalement dans le box afin de se positionner face au plateau choisi. Le soufflet accordéon est guidé par des glissières sur ses côtés afin d'accompagner le déplacement vertical du four. Cette dernière solution peut être envisagée lorsqu'il est présenté des menus différents dans chaque colonne de stockage.

Selon une deuxième variante, la zone de stockage réfrigérée peut être présentée sous la forme d'un tourniquet de stockage ayant une double colonne, voire plusieurs, qui vient pivoter autour d'un axe central pour présenter la colonne de plateaux à réchauffer, face à la zone de chauffage comportant le four thermique. Ainsi l'autre colonne peut toujours rester en stockage réfrigéré et conserver toute disponibilité pour le chargement. Un cable-tendeur permet à un enrouleur le rappel du soufflet-accordéon selon le déplacement vertical, ce dernier passe alors dans une bobine équipée d'une éponge imbibée d'un produit désinfectant à base de chlore, afin de nettoyer le soufflet et préserver l'hygiène du dispositif.

Une grille d'aération munie d'un filtre et située à la base du dispositif permet à une turbine solidaire au box de translation, l'aspiration pour le renouvellement et refroidissement de l'air du-dit box.

Une autre turbine tangentielle située sur la partie supérieure du box permet l'évacuation des calories accumulées dans le box de translation comportant le four, elle les évacue à l'extèrieur du dispositif lequel dispose d'une trappe d'évacuation face à chaque colonne de stockage. L ouverture de cette trappe est effectuée par un ergot poussé par le déplacement horizontal du box du four. Ce crochetage permet de garder ouvert le volet de la trappe, et en même temps, il permet le déclenchement de la turbine.

La barrière thermique formant une déformation sur le plateau et servant de butée au plateau et de fermeture à l' enceinte du four à micro-ondes, comporte une bande d'acier inoxydable d'une forte épaisseur, type 18/10 afin d'éviter la fuite des ondes. Cette bande d'acier inoxydable est fortement collée ou fixée sur la déformation du plateau mais peut aussi être fixe et insérée sur le support du plateau, ce dernier venant la chevaucher par sa déformation.

Cette barrière vient fortement se plaquer et s'enclencher en pression contre la périphérie de l'ouverture de l'enceinte du four à micro-ondes, aidée en cela par le mécanisme de mouvement motorisé qui permet l'introduction de la zone du plateau-repas à cuire ou à réchauffer. La pression effectuée par ce mécanisme permet ainsi de maintenir fermée l'enceinte pendant la cuisson.

Ce dispositif objet de l'invention peut distribuer tous types de menus, comme un repas complet, présenté sur un plateau, avec une entrée froide et un plat chaud à cuire ou à réchauffer, comme il a été déjà décrit dans le brevet principal mais un plat unique peut également être introduit dans le dispositif, puis distribué, tel un plat cuisiné, quiche, pizza ou autres. Ces derniers sont alors posés sur un tiroir ou support-plat dont le rebord extèrieur présente la même déformation que le plateau-repas précédemment cité, avec une bande d'acier inoxydable afin de fermer hermétiquement l'entrée du four, une fois que le mécanisme de mouvement l'y aura fait pénêtrer.

La cuisson ou la décongélation par micro-ondes ne permettant pas de restituer un produit doré et gratiné, le four de propulsion des ondes peut-être équipé d'un grill pour finir le gratinage, comme cela existe déjà dans un four à micro-ondes du Commerce.

Une autre variante permet le gratinage qui se situe à l'extèrieur de l'enceinte réfrigérée afin de ne pas compromettre la zone de réfrigération interne. Ce gratinage est effectué à l'évacuation du plateau par un dispositif de brûleurs à infrarouges permettant une action rapide.

Ces brûleurs à infrarouges sont situés sous le volet de fermeture de chaque étagère de plateaux-repas. L'ouverture de chaque volet est commandée par une timonerie articulée et reliée au mécanisme de mouvement du plateau, dont le déplacement pour l évacuation est simultané à l ouverture du volet lequel est maintenu à l'horizontale pour le gratinage par les infrarouges. Ceux-ci sont escamotés lors de la fermeture du volet

Un capotage articulé et situé sur chaque volet d'ouverture d'étagère, permet la protection de l'utilisateur, pendant le fonctionnement des brûleurs à infrarouges.

La timonerie d'ouverture du volet comporte une sécurité montée sur des amortisseurs pour permettre le réglage de la commande d'ouverture de chaque volet. Etant reliée au mécanisme de mouvement du plateau et après l'introduction de ce dernier elle maintient le volet fermé afin que l utilisateur ne puisse l'ouvrir sans qu'il ait été commandé par un monnayeur ou autres.

Sur les dessins ci-annexés donnés à titre d'exemples non limitatifs des formes de réalisation de l'invention :
La figure 1 représente le dispositif dans son ensemble vu en coupe transversale.
La figure 2 montre le plateau en action.
La figure 3 montre le dispositif vu de côté.
La figure 4 représente un plan du plateau.
La figure 5 représente le dispositif en coupe dans son ensemble vu de côté.
La figure 6 représente la coupe vue de dessus du dispositif dans une des variantes avec déplacement horizontal.
Sur la figure 7 sont représentés, en A un tiroir-support-plat et en B un plateau-repas, avec leur barrière thermique.
La figure 8 montre en éclaté un plateau introduit dans le micro-ondes pour la remise en température.
L'éclaté de la figure 9 montre une variante du dispositif avec une case chauffante par étagère.
Sur la figure 10 est représentée une autre variante avec dispositif d'introduction en tourniquet de stockage du dispositif.

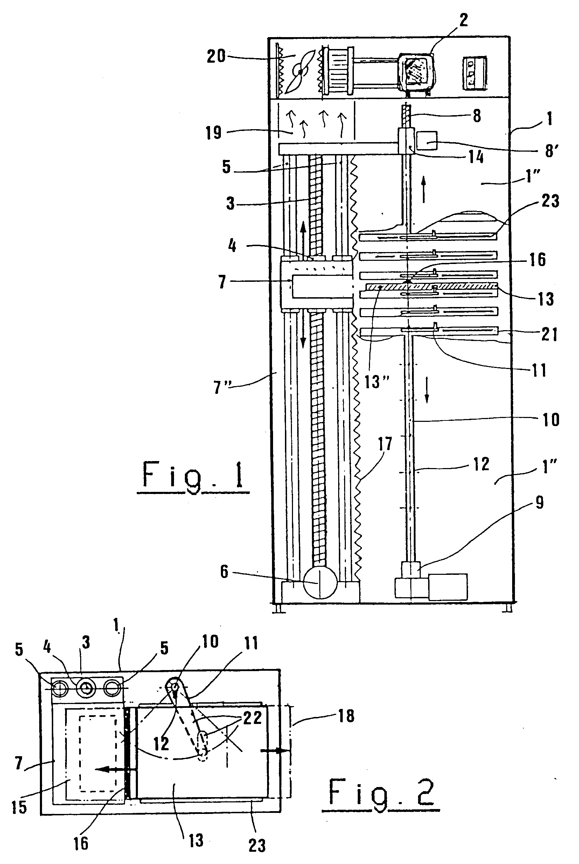

Le dispositif de la figure 1 comporte une enceinte réfrigérée 1 par un groupe de froid 2. Une vis sans fin à bille 3 permet par un écrou 4 porteur du micro-ondes 7 le déplacement vertical de ce dernier. Des glissières 5 recouvertes de films à base de silicone maintiennent et facilitent le déplacement du micro-ondes 7, pour une meilleur stabilité et précision. La vis sans fin 3 est actionnée par un moteur 6.

Parallèlement à cet ensemble, des plateaux 13 sont gerbés sur des étagères 21 à glissières 23.

Le mécanisme 11 du mouvement du plateau 13 fait déplacer ce dernier jusque dans le micro-ondes 7, afin de remettre en température les produits situés dans la zone 13'' du plateau. Ce mécanisme 11 est enclenché par des ergots 12 situés sur l'arbre à cames 10 actionné par la vis sans fin 8 et son moteur 8'. Afin de venir accrocher le mécanisme 11, par l'ergot 12 de l'arbre à cames 10, ce dernier effectue une rotation actionnée par le moteur 9.

Le détecteur 14 détermine le choix du plateau devant être réchauffé. Une barrière thermique 16 située sur le plateau ou non, vient servir de butée au plateau entrant dans le micro-ondes, mais cette barrière sert aussi principalement à fermer le micro-ondes pendant la remise en température du plat cuisiné.

Un soufflet-accordéon 17 fixé sur le micro-ondes et accompagnant ce dernier dans son déplacement vertical, isole la zone réfrigérée 1'' de la zone de circulation 7'', évitant que les calories produites par la remise en température ne viennent se disperser dans la zone 1'' réfrigérée. Ces calories passent par un rideau d'air 19 pour se refroidir, puis sont recyclées dans une gaine de ventilation 20 et le groupe de froid 2.

Sur la figure 2, le plateau 13 est représenté en position 15 entré dans le micro-ondes 7 et en position 18 de sortie pour la consommation. On peut voir la vis sans fin 3 dans son écrou 4 et les glissières 5 pour le déplacement vertical du micro-ondes 7. On peut remarquer également le mécanisme 11 avec ses deux timoneries à biélettes 22 et l'ergot 12 à l'arbre à cames 10 venant sélectionner le plateau choisi.

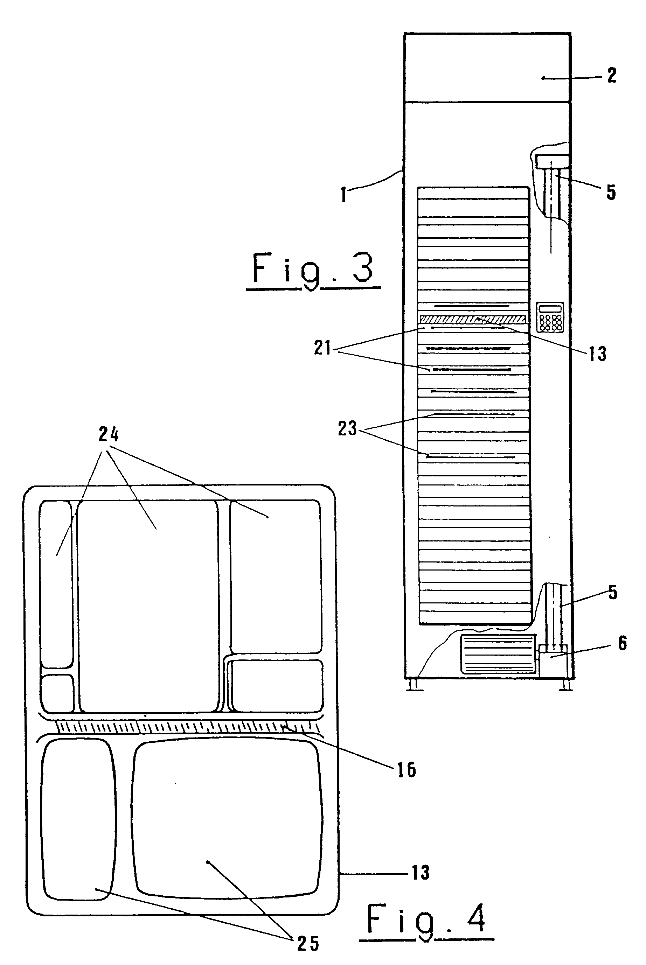

Sur la figure 3, le dispositif est représenté en coupe, côté micro-ondes, un plateau 13 est posé sur une étagère 21 comportant des glissières 23, il est en attente dans l'enceinte réfrigérée 1 par le groupe frigorifique 2. On aperçoit une partie des glissières 5 du micro-ondes, celles-ci étant recouvertes de films de silicone. Le moteur 6 permet le déplacement vertical du micro-ondes ici stationné face au plateau 13, prêt à le recevoir.

Sur la figure 4, le plan du plateau 13 est représenté avec les alvéoles 24, contenant des produits restant en froid, la barrière thermique 16 sert de butée et de fermeture pour la remise en température dans le micro-ondes.

Les alvéoles 25 recoivent les plats cuisinés à réchauffer. Ces alvéoles sont évidées pour une meilleure remise en température. Le nombre d'alvéoles peut être unique et n'est pas limitatif.

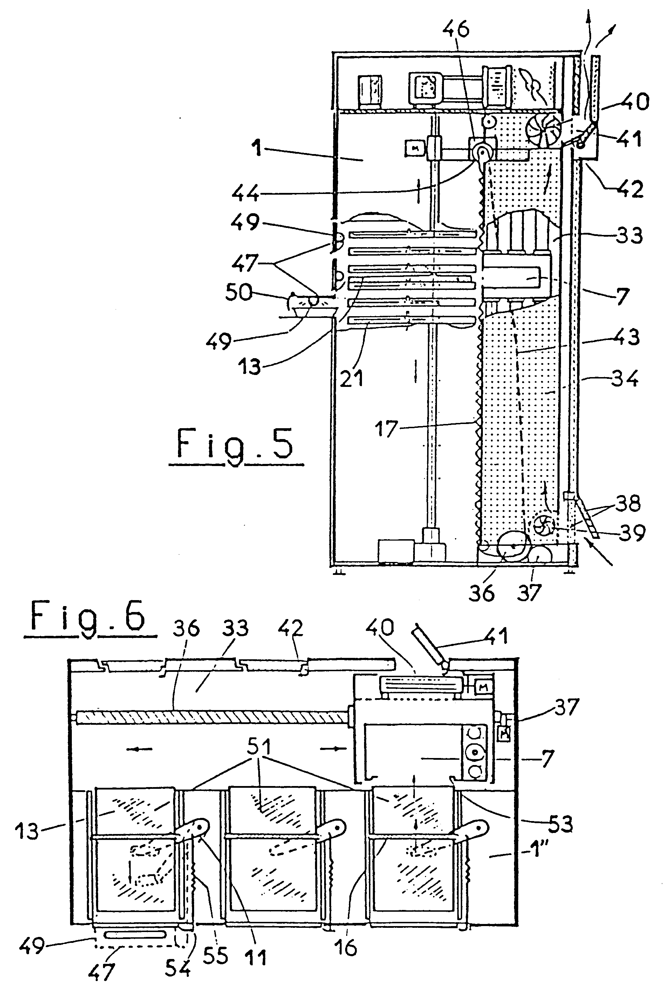

Sur la figure 5 sont représentés l enceinte réfrigérée 1 de stockage des plateaux-repas 13 et la zone de chauffage 33 avec le box 34 de translation horizontale, dans lequel se déplace verticalement le four à micro-ondes 7. La vis à bille 36 entraînée par le moteur 37 permet le déplacement horizontal de l'ensemble constitué par le box 34 et le four 7. A la base du dispositif sont disposés la grille et son filtre d'aération 38 ainsi que la turbine 39. La turbine tangentielle supèrieure 40 évacue les calories hors du box 34 par la trappe 41, ouverte par l'ergot 42. Le câble tendeur 43 de l'enrouleur 44 permet le rappel du soufflet-accordéon 17 qui passe dans une bobine 46 pour le nettoyage du-dit soufflet. Les volets 47 de chaque étagère 21 comportent des brûleurs à infrarouges 49, ainsi qu'un capotage 50 articulé.

La figure 6 montre un ensemble à trois colonnes 51 de stockage disposées côte à côte, avec chacune un plateau-repas 13 en attente dans la zone réfrigérée 1''. Chaque plateau 13 a sa barrière thermique 16 venant s'enclencher dans l'encoche 53 de la périphérie du four 7 de cuisson ou de remise en température. Le mécanisme de mouvement 11 de chaque plateau est synchronisé avec la timonerie 54 à amortis seur 55 pour l'ouverture du volet 47 sous lequel est logé le brûleur à infrarouges 49. Dans la zone de chauffage 33, la vis à bille 36 et son moteur 37 permettent la translation du box 34 et du four de chauffe 7. La trappe 41 est ouverte par le passage du box 34 grâce à un ergot 42 la turbine tangentielle 40 motorisée se déclenche simultanément pour évacuer les calories hors du dispositif.

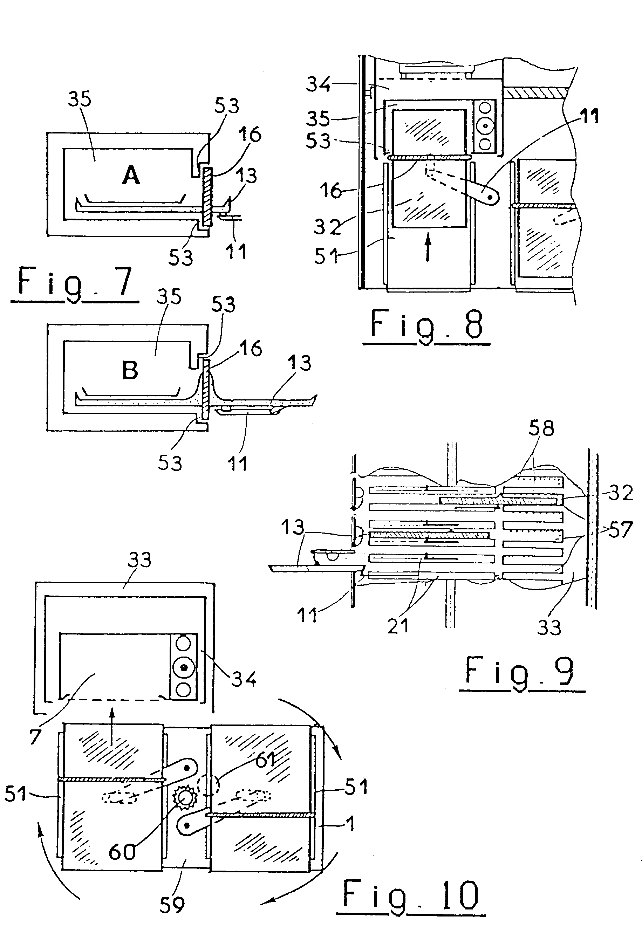

En A et B de la figure 7 on peut voir un tiroir support-plat ainsi qu'un plateau repas 13 introduits chacun dans le four 7, leur barrière thermique 16 vient s' enclencher dans l'encoche 53 de la périphérie du four. Le mouvement et le maintien de la fermeture du four est effectué par le mécanisme de mouvement 11.

Sur la figure 8, le box 34 est venu se positionner face à une colonne de stockage 51, le plateau-repas 13 est introduit dans le four 7 par le mécanisme de mouvement 11, la barrière thermique 16 est positionnée dans l'encoche 53 du four 7.

La variante de la figure 9 montre un mini-four 57 pour chaque étagère 21 à plateau-repas 13, chacun de ces minifours a sa propre source d'energie thermique 58. Il n'est plus besoin ici de translation verticale ni horizontale. Néanmoins, l'introduction et l'évacuation de plateau-repas s'effectue toujours par le mécanisme de mouvement 11.

La variante de la figure 10 montre un tourniquet 59, avec deux colonnes de stockage 51 disposées de façon opposée. Elles pivotent sur un axe central 60 entraîné par un moteur 61, pour se positionner face au box 34 et au four 7 de la zone de chauffage 33 qui elle, ne pivote pas, car seule la partie réfrigérée 1 est pivotante. Le four 7 de remise en température se déplace alors verticalement pour se présenter devant le plateau sélectionné.

Le positionnement des divers élements constitutifs donne à ce dispositif un maximum d'effets utiles qui n'avaient pas été obtenus à ce jour par des dispositifs similaires.

## Revendications

1. Dispositif automatique apte à retirer d'un compartiment réfrigéré, à l'aide d'un système articulé, des produits alimentaires pour les introduire dans un four micro-ondes afin de les réchauffer ou d'achever leur cuisson, et à les retirer pour les mettre à disposition du consommateur, comprenant
une enceinte (1) dans laquelle un four (7), de préférence à micro-ondes, peut coulisser verticalement et/ou horizontalement pour se positionner face à un plateau repas (13) sélectionné par le consommateur parmi ceux se trouvant sur des étagères (21) constituant une ou plusieurs colonnes de stockage (51) situées dans une zone réfrigérée (1'') de l'enceinte (1), un arbre à cames (10) vertical, apte à effectuer des rotations grâce à un moteur (9) situé à sa base et à coulisser de haut en bas et vice versa grâce à une vis sans fin (8) actionnée par un second moteur (8'), étant équipé d'ergots (12) disposés de telle manière que, sous l'effet du coulissement du dit arbre à cames, l'un de ces ergots vienne enclencher le mécanisme de mouvement (11) situé sous le plateau-repas choisi, ledit mécanisme de mouvement étant alors actionné par la rotation de l'arbre à cames, un détecteur (14) placé sur celui-ci déterminant et amenant l'ergot correspondant au plateau choisi pour enclencher le mécanisme de mouvement de ce dernier, ledit mécanisme de mouvement étant agencé pour n'introduire que la zone à réchauffer (13'') du plateau-repas choisi dans le four (7) pour sa remise en température, et pour retirer le plateau-repas dudit four une fois celle-ci terminée.

2. Dispositif selon la revendication 1, se caractérisant par le fait que le coulissement vertical du four (7) est effectué par une vis sans fin à billes (3) actionnée par un moteur (6), des glissières (5) recouvertes d'un film à base de silicone maintenant le four et permettant des mouvements verticaux précis et stables.

3. Dispositif selon la revendication 1, se caractérisant par le fait que le déplacement du plateau-repas (13) dans et hors du four (7) est effectué par deux timoneries à biellettes (22) du mécanisme de mouvement (11) dont la rotation est actionnée par l'arbre à cames (10) et son moteur (9), cette rotation lors de la sortie du plateau-repas (13) amenant ce dernier plus loin que sa position initiale, pour pouvoir être saisi par le consommateur.

4. Dispositif selon la revendication 1, se caractérisant par le fait que la zone de circulation (7'') du four (7) et l'enceinte réfrigérée (1) sont isolées, d'une part par une barrière thermique (16) du plateau-repas (13) isolant la zone à réchauffer (13'') et servant de butée pour l'entrée dudit plateau-repas, d'autre part par un soufflet-accordéon (17) fixé sur le four (7) pour accompagner celui-ci et séparant l'enceinte réfrigérée (1) de la zone de circulation(7'') du four produisant des calories.

5. Dispositif selon l'une quelconque des revendications précédentes, caractérisé par des plateaux-repas (13) stockés dans plusieurs colonnes de stockage (51) en zone réfrigérée (1''), le four coulissant verticalement dans un box (34) pour se positionner devant le plateau-repas (13) choisi qui est introduit dans le four (7) par le mécanisme de mouvement (11).

6. Dispositif selon la revendication 5, se caractérisant par le fait que les colonnes de stockage (51) sont placées côte à côte, le box (34) et le four (7) effectuant une translation horizontale au moyen d'une vis sans fin horizontale (36) pour se positionner devant l'une des colonnes de stockage (51).

7. Dispositif selon les revendications 5 et 6, se caractérisant par le fait que le moyen d'évacuation des calories est une turbine tangentielle (40) motorisée et solidaire du box (34) dont la translation horizontale permet de crocheter un ergot (42) d'une trappe (41) pour son ouverture.

8. Dispositif selon la revendication 5, se caractérisant par un tourniquet de stockage (59) dont seules les colonnes de stockage (51) pivotent autour d'un axe central (60) entraîné par un moteur (61) pour se positionner face à la zone de chauffage (33) et fixe du box (34) et du four (7).

9. Dispositif selon l'une quelconque des revendications précédentes, se caractérisant par le fait qu'un moyen de gratinage constitué par exemple par un tube infrarouge (49) est situé sous un volet (47) dont l'ouverture est synchronisée avec l'extraction du plateau-repas (13) par une timonerie (54) à amortisseur de réglage (55) et par le mécanisme de mouvement (11).

10. Dispositif selon l'une quelconque des revendications précédentes, se caractérisant par le fait que la barrière thermique (16) du plateau-repas (13) est formée d'une bande d'acier inoxydable de forte épaisseur venant s'enclencher dans une encoche (53) du four (7) et maintenue en position fermée par la pression du mécanisme de mouvement (11).

11. Dispositif selon la revendication 1, se caractérisant par le fait que les plateaux-repas (13) sont stockés dans plusieurs colonnes de stockage (51) en zone réfrigérée (1''), le moyen de réchauffage étant constitué d'autant de mini-fours (57) que d'étagères (21) portant les plateaux-repas (13) sur une colonne de stockage, lesdits mini-fours coulissant horizontalement dans un box (34) pour se positionner devant la colonne de stockage contenant le plateau-repas (13) choisi, qui est introduit dans le mini-four (57) par le mécanisme de mouvement (11), chaque mini-four étant équipé d'une source d'énergie (58) individuelle, de même type pour l'ensemble du dispositif.

## Claims

1. Automatic device which uses an articulated system to withdraw food products from a refrigerated compartment, to introduce them into a micro-wave oven in order to reheat them or to complete their cooking, and to extract them to make them available to consumers, comprising:
a containment (1) in which an oven (7), preferably micro-wave, can slide vertically and/or horizontally to take up a position opposite a food tray (13) selected by a consumer from among those on the display shelves (21), which consist of one or several storage columns (51) in a refrigerated area (1'') of the containment (1), a vertical cam shaft (10) with motor (9) situated at its base for rotating the shaft and capable of upward and downward translation driven by a worm screw (8) operated by a second motor (8'), and fitted with pins (12) arranged so that under the sliding effect of the cam shaft, one of these pins starts the movement mechanism (11) situated under the selected food tray, the said movement mechanism being then actuated by rotation of the cam shaft, a detector (14) placed on the latter determining and positioning the pin corresponding to the selected tray for actuating the movement mechanism of the latter, the said movement mechanism being arranged so as to introduce only the area of the selected food tray to be heated (13') into the oven and to withdraw the food tray from the said oven once cooking completed.

2. Device as per claim 1 characterized in that vertical translation of the oven (7) is driven by a ball worm screw (3) actuated by a motor (6), slides (5) covered by a silicon-based film maintaining the oven and enabling accurate and stable vertical translation.

3. Device as per claim 1, characterized in that the displacement of the food tray (13) into and out of the oven (7) takes place by two linkage rods (22) of the movement mechanism (11), the movement of which is operated by the cam shaft (10) and its motor (9), this rotation during the witdrawal of the food tray (13) bringing the latter further than its initial position in order to be grasped by the consumer.

4. Device as per claim 1 characterised by the fact that the circulation area (7'') of the oven (7) and the refrigerated containment (1) are isolated, on the one hand by a food tray (13) thermal barrier (16) which insulates the area to be heated (13'') and serves as a stop for an incoming food tray, and on the other hand by concertina wall (17) fixed on the oven (7) so as to move with it and separate the refrigerated containment (1) from the circulation area (7'') of the oven producing the heat.

5. Device as per any one of the aforesaid claims, characterized in that the food trays (13) are stored in several storage columns (51) in the refrigerated area (1''), the oven sliding vertically in an enclosure (34) in order to take up a position in front of the selected food tray (13) which is introduced into the oven (7) by the movement mechanism (11).

6. Device as per claim 5 characterized in that the storage columns (51) are placed side by side, the box (34) and the oven (7) being translated horizontally by a worm screw (36) in order to take up a position in front of one of the storage columns (51).

7. Device as per claims 5 and 6 characterized in that the means used to evacuate the heat is a motorized tangential air fan (40) forming an integral part of the enclosure (34) whose horizontal movement allows a pin (42) to hook onto and open a trap door (41).

8. Device as per claim 5 characterized by the presence of a storage carrousel (59), only the storage columns of which (51) pivot around a central axis (60) which is driven by a motor (61) in order to take up a position opposite the fixed heating zone (33) of the enclosure (34) and the oven (7).

9. Device as per any one of the aforesaid claims characterized in that a system for *gratinage* consisting for instance of an infrared tube (49) is positioned under a flap (47) the opening of which is synchronized with the extraction of the food tray (13) by a system of linkage rods (54) with controlling damper (55) and by the movement mechanism (11).

10. Device as per any one of the aforesaid claims characterized in that the heat barrier (16) of the food tray (13) is formed of a stainless steel strip of substantial thickness which slots into a notch (53) on the oven (7) and is maintained in the closed position by the pressure of the movement mechanism (11).

11. Device as per claim 1 characterised in that the food trays (13) are stored on several storage columns (51) in the refrigerated zone (1''), the means for reheating consisting of as many mini-ovens (57) as shelves (21) carrying the food trays (13) on a storage column, the said mini-ovens sliding horizontally in an enclosure (34) in order to take up position in front of the storage column containing the selected food tray (13) which is introduced into the mini-oven (57) by the movement mechanism (11), each mini-oven being equipped with an Individual energy source (58) of the same type for all the device.

## Patentansprüche

1. Selbsttätige Vorrichtung, geeignet, aus einem gekühlten Kompartment mit Hilfe eines gelenkigen Systems Nahrungsmittel zu entnehmen und sie in einen Mikrowellenofen einzuführen, um sie aufzuwärmen bzw. ihre Garung zu vollenden und sie wieder herauszunehmen zur Verfügung des Konsumenten, bestehend aus: einem Gehäuse (1), in dem ein Ofen (7), vorzugsweise ein Mikrowellenofen, vertikal und/oder horizontal gleiten kann, um sich vor ein Imbißtablett (13) zu positionieren, das vom Konsumenten unter den sich auf den Regalen (21) befindlichen Tabletts gewählt wurde, wobei die Regale eine oder mehrere Lagersäulen (51) in dem gekühlten Bereich (1'') des Gehäuses (1) bilden, eine vertikale Steuerwelle (10), geeignet Drehbewegungen mittels eines an ihrer Basis angeordneten Motors (9) auszuführen und von oben nach unten und umgekehrt zu gleiten mittels einer von einem zweiten Motor (8') angetriebenen Schneckenwelle (8), ausgerüstet mit Zapfen (12), die so angeordnet sind, daß unter der Gleitwirkung der besagten Steuerwelle einer der Zapfen den unter dem gewählten Imbißtablett befindlichen Bewegungsmechanismus (11) auslöst und der besagte Bewegungsmechanismus durch die Drehung der Steuerwelle betätigt wird, wobei ein unter dieser angebrachter Detektor (14) den dem gewählten Imbißtablett entsprechenden Zapfen bestimmt und mitführt, um den Bewegungsmechanismus des letzteren auszulösen und der besagte Bewegungsmechanismus so ausgelegt ist, daß er nur die zu wärmende Zone (13'') des gewählten Imbißtabletts in den Ofen (7) einführt und das Imbißtablett nach erfolgter Temperaturerhöhung aus dem besagten Ofen ausstößt.

2. Vorrichtung nach Anspruch 1, dadurch gekennzeichnet, daß das vertikale Gleiten des Ofens (7) durch eine von einem Motor (6) angetriebene kugelgelagerte Schnecke (3) erfolgt, wobei der Ofen von mit einem Film auf Silikonbasis beschichteten Gleitschienen (5) gehalten wird, welche präzise und stetige vertikale Bewegungen erlauben.

3. Vorrichtung nach Anspruch 1, dadurch gekennzeichnet, daß die Bewegung des Imbißtabletts (13) in und aus dem Ofen (7) durch zwei Schwingarmgestänge (22) des Bewegungsmechanismus (11) erfolgt, dessen Drehung durch die Steuerwelle (10) und ihren Motor (9) betätigt wird, wobei diese Drehung das Imbißtablett (13) bei der Ausgabe weiter als seine ursprüngliche Position erfolgt, damit es vom Konsumenten gefaßt werden kann.

4. Vorrichtung nach Anspruch 1, dadurch gekennzeichnet, daß der Bewegungsbereich (7'') des Ofens (7) und das gekühlte Gehäuse (1) isoliert sind, einerseits durch eine Wärmesperre (16) des Imbißtabletts (13), welche den zu erwärmenden Bereich (13'') isoliert und als Anschlag bei der Einführung des besagten Imbißtabletts dient, andererseits durch einen am Ofen (7) befestigten Balg (17), der den Ofen begleitet und das gekühlte Gehäuse (1) von dem Bewegungsbereich (7'') des Wärmekalorien erzeugenden Ofens trennt.

5. Vorrichtung nach irgendeinem der vorhergehenden Ansprüche, gekennzeichnet durch in mehreren Lagersäulen (51) im gekühlten Bereich (1'') gelagerten Imbißtabletts (13) während der Ofen vertikal in einer Box (34) gleitet, um sich vor das gewählte Imbißtablett (13) zu positionieren, das durch den Bewegungsmechanismus (11) in den Ofen (7) eingeführt wird.

6. Vorrichtung nach Anspruch 5, dadurch gekennzeichnet, daß die Lagersäulen (51) nebeneinander angeordnet sind, während die Box (34) und der Ofen (7) mittels einer horizontalen Förderschnecke (36) eine horizontale Verschiebung ausführen, um sich vor eine der Lagersäulen (51) zu positionieren.

7. Vorrichtung nach den Ansprüchen 5 und 6, dadurch gekennzeichnet, daß das Mittel der Kalorienabfuhr eine motorisierte und mit der Box (34) fest verbundenen Tangentialturbine ist, deren horizontale Verschiebung ermöglicht, in einen Zapfen (42) einer Klappe (41) zu deren Öffnung einzuhaken.

8. Vorrichtung nach Anspruch 5, gekennzeichnet durch ein Lagerdrehkreuz (59) bei dem nur die Lagersäulen (51), durch einen Motor (61) angetrieben, um eine zentrale Achse (60) schwenken, um sich vor den feststehenden Heizbereich (33) der Box (34) und des Ofens (7) zu positionieren.

9. Vorrichtung nach irgendeinem der vorhergehenden Ansprüche, dadurch gekennzeichnet, daß ein Mittel zum Überbacken, zum Beispiel bestehend aus einer Infrarot-Röhre (49) unter einer Klappe (47) angebracht ist, deren Öffnung mit der Ausgabe des Imbißtabletts (13) durch ein Gestänge (54) mit einem Regeldämpfer (55) und durch den Bewegungsmechanismus (11) synchronisiert ist.

10. Vorrichtung nach irgendeinem der vorhergehenden Ansprüche, dadurch gekennzeichnet, daß die Wärmesperre (16) des Imbißtabletts von einem dicken Edelstahlband gebildet wird, das in eine Nute (53) des Ofens (7) eingreift und in geschlossener Stellung durch den Druck des Bewegungsmechanismus (11) gehalten wird.

11. Vorrichtung nach Anspruch 1, dadurch gekennzeichnet, daß die Imbißtabletts (13) in mehreren Lagersäulen (51) im gekühlten Bereich (1'') gelagert werden, wobei das Heizmittel aus ebensovielen Miniöfen (57) besteht wie Regale (21) mit Imbißtabletts (13) in einer Lagersäule vorhanden sind, und die Miniöfen horizontal in einer Box (34) gleiten, um sich vor die Lagersäule zu positionieren, die das gewählte Imbißtablett enthält, welches in den Miniofen (57) mittels des Bewegungsmechanismus (11) eingeführt wird und jeder Miniofen mit einer individuellen Energiequelle (58) des gleichen Typs wie die gesamte Einheit der Vorrichtung ausgestattet ist.
